# EUROPEAN PATENT APPLICATION

(11) **EP 4 769 913 A1**
(43) Date of publication of application: **01.07.2026**
(21) Application number: 25224594.9
(22) Date of filing: 17.12.2025
(51) Int. Cl.: H02K 15/043

(54) **3D WAVE-WOUND WIRE PREFORMING DEVICE**

(30) Priority: 25.12.2024 CN 202411938578
(71) Applicant: UPTEC Intelligent Manufacturing (Wuxi) Co., Ltd., Wuxi City 214000 (CN)
(72) Inventor: YE, Xin, Wuxi City, Jiangsu Province (CN)
(74) Representative: Faggioni, Carlo Maria

(57) **Abstract**

A 3D wave-wound wire preforming device is disclosed. The preforming device includes a workbench, where a top plate is installed on the top of the workbench, an adjustment and lifting mechanism and a pre-winding mechanism are installed on a working surface of the top plate, and the pre-winding mechanism is positioned on the top of an output end of the adjustment and lifting mechanism. Through the 3D preforming device, a single wave-wound wire that has already undergone 2D forming is wound, and the wound wave-wound wire is subjected to 3D stamping. After the 2D wave-wound wire is formed into a coil, the coil forms a closed integral structure. During stamping, the performing device can more accurately maintain a winding position, thereby reducing a risk of deformation and misalignment, and improving quality of a finished product.

## Description

### FIELD OF TECHNOLOGY

The present invention belongs to the field of a copper wire forming device and specifically relates to a 3D wave-wound wire preforming device.

### BACKGROUND

3D forming technology for stator wave-wound wires is a revolutionary innovation in the field of motor manufacturing. The use of wave windings and 3D forming processes not only significantly improves motor performance but also promotes the development of motor manufacturing towards automation and intelligence. With the continuous improvement of the technology, it will surely play a more significant role in fields such as new energy vehicles, aerospace, and renewable energy, providing solid technical support for the development of high-efficiency and energy-saving devices.

For specific stator designs (such as slotless windings or stators with special shapes), a 3D wave-wound wire forming process is adopted, that is, wave-wound wires are formed by a 2D wave-wound forming process, and then subjected to 3D assembling or processing, to achieve 3D forming of the wave-wound wires.

However, for an operation process of directly stamping and forming 2D wave-wound wires by using a conventional 3D stamping and forming device, the 2D wires are relatively loose and prone to deformation, so direct forming of the 2D wires may lead to uncontrolled winding shapes, affecting motor performance. Additionally, direct 3D stamping for 2D-formed wave-wound wires can also result in winding scattering or misalignment.

Therefore, how to ensure the stability of the overall structure of 2D-formed wave-wound wires during 3D stamping and to facilitate 3D stamping and forming are problems that need to be solved.

### SUMMARY OF THE INVENTION

In view of the above shortcomings, the present invention provides a 3D wave-wound wire preforming device, and the preforming device includes a workbench, where a top plate is installed on the top of the workbench, an adjustment and lifting mechanism and a pre-winding mechanism are installed on a working surface of the top plate, and the pre-winding mechanism is positioned on the top of an output end of the adjustment and lifting mechanism;
the adjustment and lifting mechanism includes a lifting assembly and an adjustment assembly, the adjustment assembly is installed on the working surface of the top plate, the adjustment assembly is configured to transfer a wave-wound copper wire placed on the top to the lifting assembly, and the lifting assembly is configured to lift the wave-wound copper wire to a height suitable for the pre-winding mechanism;
the pre-winding mechanism includes a circular die I and a circular die II, as well as several wire hooking assemblies installed between the circular die I and the circular die **II** and configured to fix the wave-wound copper wire, several wire pressing assemblies installed on a same side of the circular die II and configured to limit the wave-wound copper wire, and a drive assembly installed on a same side of the circular die I; and the circular die I and the circular die **II** are respectively sleeved on two ends of the rotating shaft via fixed circular die connectors for synchronous rotation; and
the wire hooking assemblies are inflated via an inflation assembly fixed to a bottom of the top plate.

Furthermore, the lifting assembly includes a second fixing plate fixedly installed at the bottom of the top plate, a lifting cylinder is fixedly installed at a bottom of the second fixing plate, an output end of the lifting cylinder passes through and extends above the top plate and then is connected to a lifting plate, four corners of the lifting cylinder are each provided with a linear bearing, a guide shaft is slidably installed on an inner side of each of the four linear bearings, tops of the four guide shafts respectively pass through the top plate and are connected to four corners of the lifting plate, and bottoms of the four guide shafts are connected to four corners of a U-shaped connecting plate.

Furthermore, the adjustment assembly includes a positioning block installed on the working surface of the top plate, a sliding plate matching with the positioning block is slidably installed on the top of the positioning block, two lower module fixing plates symmetrically distributed on two sides of the positioning block are fixedly installed on the top of the lifting plate, an arc-shaped lower module is slidably installed on an inner side of each of the lower module fixing plates, a fourth cylinder is fixedly installed at one end of each of the lower module fixing plates away from the lifting cylinder, and an output end of the fourth cylinder is fixedly connected to a side wall of the arc-shaped lower module on a same side.

Furthermore, a vertical plate I and a vertical plate II are respectively installed on two sides of the working surface of the top plate; the drive assembly includes a servo motor, a driving gear, and a driven gear; the servo motor is installed on an outer side of the vertical plate II, an output end of the servo motor passes through the vertical plate II, extends to an inner side of the vertical plate II, and then is coaxially fixed to the driving gear; and the driven gear is installed on the inner side of the vertical plate II and is engaged with the driving gear for transmission.

Furthermore, the wire pressing assembly includes a cylinder sleeve base fixedly sleeved on an outer surface of a rotating shaft, several fifth cylinders are installed around the cylinder sleeve base, an output end of each of the fifth cylinders is provided with an ejector rod connecting plate, a side of the ejector rod connecting plate away from the adjacent fifth cylinder is fixedly provided with two symmetrically distributed ejector rods, and ends of the ejector rods away from the adjacent ejector rod connecting plate are slidably connected to the circular die II.

Each ejector rod connecting plate is elastically connected to the circular die II via a second spring, and the second spring is positioned between the two adjacent ejector rods. A side of the circular die II away from a fifth cylinder is provided with a plurality of through slots arranged in an annular array and one end of the ejector rod away from the fifth cylinder extends into the through slot at a same horizontal position.

Furthermore, a wire pressing portion that is configured to limit the wave-wound copper wire is provided on an inner side of each of the through slots and include a wire pressing block, a first spring, and a limiting block assembly; the wire pressing block is positioned in the through slot and in contact with an adjacent ejector rod, and an inner top wall of the through slot is provided with a through hole through which the wire pressing block passes; and the wire pressing block is elastically connected to an inner wall of the through slot via first springs fixed on both sides thereof.

A limiting block assembly configured to limit the wave-wound copper wire is respectively installed on the outer surfaces of the circular die I and the circular die II.

Furthermore, the number of wire hooking assemblies is the same as the number of wire pressing assemblies, the wire hooking assembly includes a jaw cylinder installed on an outer ring of a circular die connector, two output ends of the jaw cylinder are fixedly connected to wire hooking blocks respectively, adjacent ends of the two wire hooking blocks are fixedly provided with a spring support post respectively, and the two spring support posts are elastically connected via a third spring.

Furthermore, one end of the ejector rod in contact with the wire pressing block is an inclined surface, one end of the wire pressing block close to an axis of the rotating shaft is an arc surface, and the inclined surface is in contact with the arc surface.

Furthermore, the inflation assembly includes a first fixing plate fixed to the bottom of the top plate via a fixing post, a third cylinder is installed on the top of the first fixing plate, an output end of the third cylinder passes through the top plate and is fixed to a connector fixing plate, and two quick connectors I are installed on a side of the connector fixing plate close to the wire hooking assembly; and
air pipe adapter blocks with the number corresponding to the number of wire pressing assemblies are installed on an outer side of the circular die 1, two quick connectors II used for communicating with the quick connectors I are fixedly installed at a bottom of each of the air pipe adapter blocks respectively, a set of elbows I that are respectively communicated with the quick connectors II inside the same air pipe adapter block are further installed on the top of the air pipe adapter block, and each set of elbows I passes through the connecting through slot and is respectively communicated with an elbows II at an air supply end of the jaw cylinder at a same horizontal position.

Compared with the prior art, the present invention has the following beneficial effects.

Through the 3D preforming device, a single wave-wound wire that has already undergone 2D forming is wound, and the wound wave-wound wire is subjected to 3D stamping. After the 2D wave-wound wire is formed into a coil, the coil forms a closed integral structure. During stamping, the performing device can more accurately maintain a winding position, thereby reducing a risk of deformation and misalignment, and improving quality of a finished product.

### BRIEF DESCRIPTION OF THE DRAWINGS

FIG. 1 is a perspective view of a 3D wave-wound wire preforming device according to the present invention.

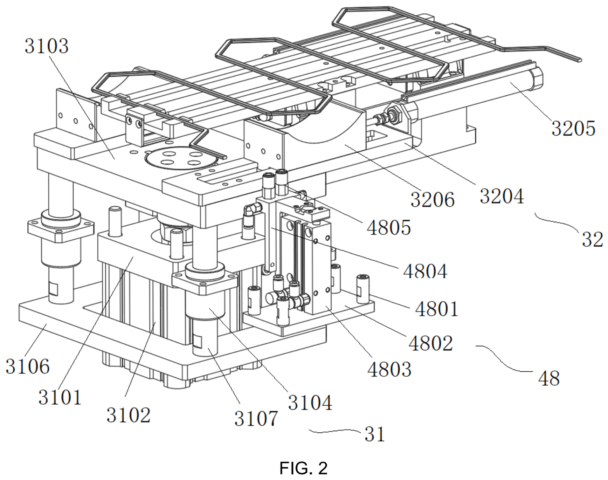

FIG. 2 is a schematic structural diagram of a lifting mechanism according to the present invention.

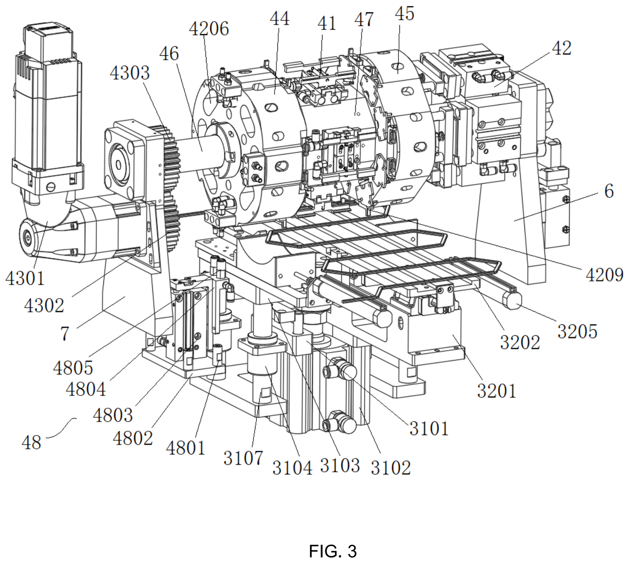

FIG. 3 is a schematic diagram showing cooperation between a lifting mechanism and a pre-winding mechanism according to the present invention.

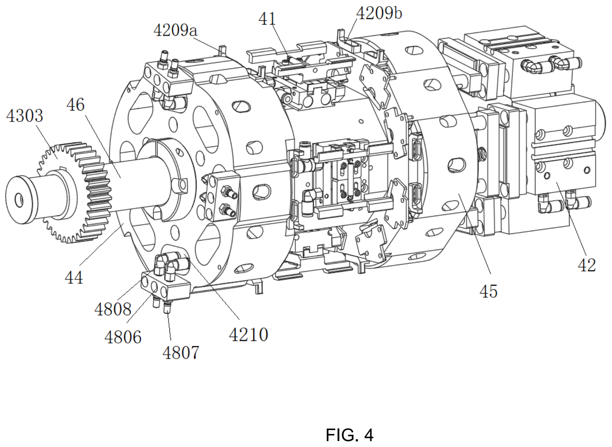

FIG. 4 is a partial schematic structural diagram of a pre-winding mechanism according to the present invention.

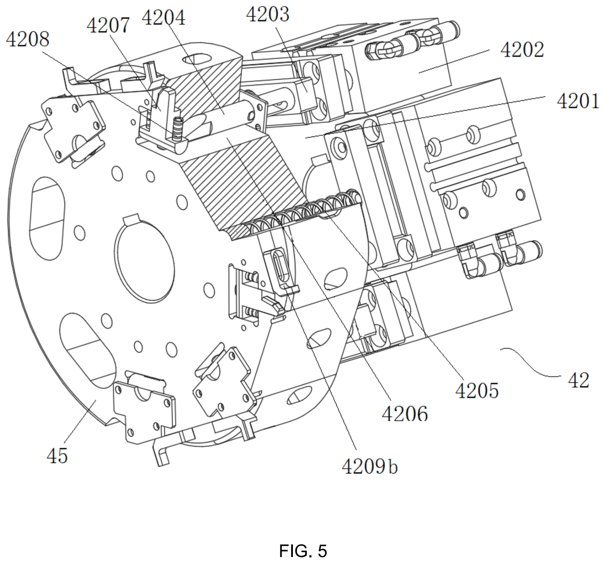

FIG. 5 is a sectional schematic structural diagram of a wire pressing assembly according to the present invention.

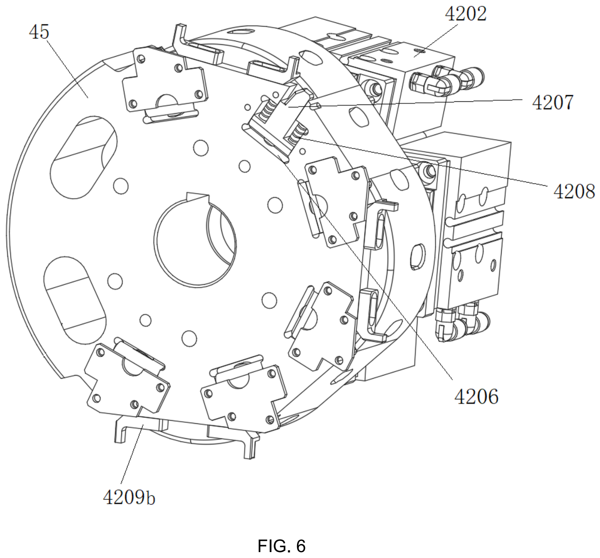

FIG. 6 is a front schematic structural diagram of a circular die II according to the present invention.

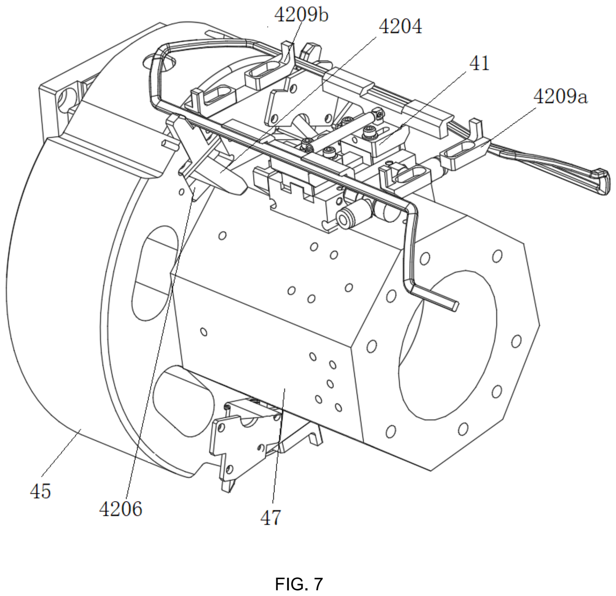

FIG. 7 is a schematic structural diagram showing cooperation of a wave-wound copper wire with a limiting block I and a limiting block II according to the present invention.

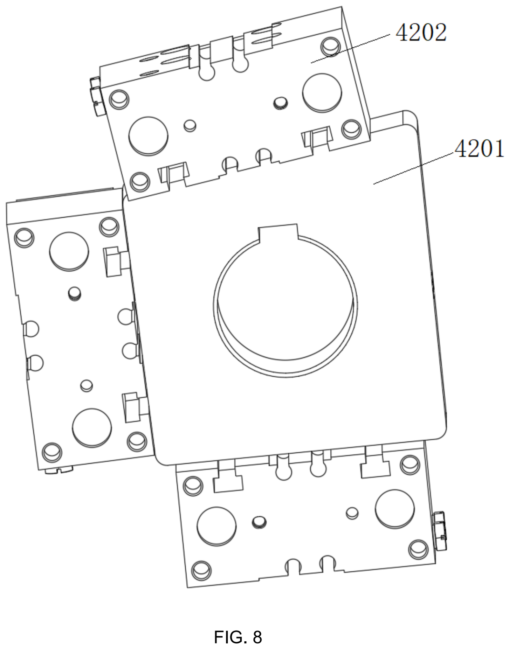

FIG. 8 is a schematic structural diagram showing assembly of a cylinder sleeve base and a fifth cylinder according to the present invention.

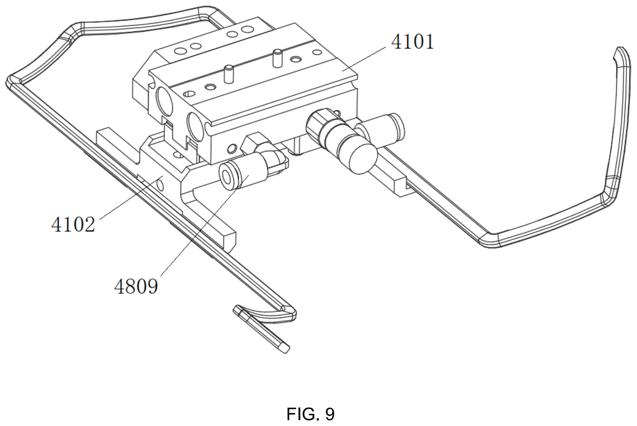

FIG. 9 is a schematic diagram of a wire hooking block and a wave-wound copper wire in an operating state according to the present invention.

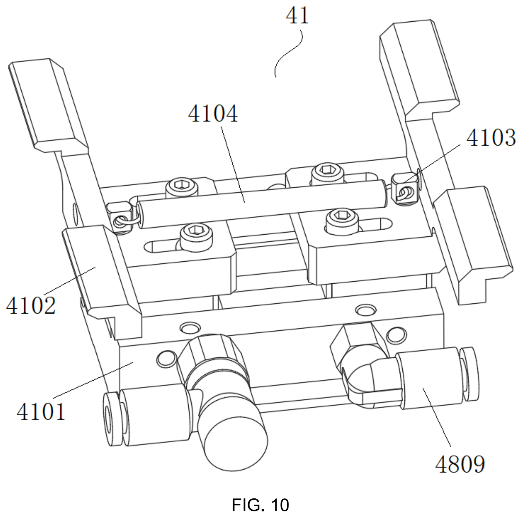

FIG. 10 is a schematic structural diagram of a wire hooking assembly according to the present invention.

### DESCRIPTION OF PREFERRED EMBODIMENTS

To facilitate understanding of the present invention, the device of the present invention will be described more comprehensively below with reference to relevant drawings. Embodiments of the device are provided in the accompanying drawings. However, the device can be implemented in many different forms and is not limited to the embodiments described herein. On the contrary, the purpose of providing these embodiments is to make the disclosures of the present invention more thorough and comprehensive.

In the description of the present invention, it should be noted that unless otherwise specified and defined explicitly, the terms "mount," "connect," and "arrange" should be understood in their general senses. For example, they may refer to a fixed connection and arrangement, and may refer to a detachable connection or arrangement, or an integral connection and arrangement. For those skilled in the art, the specific meanings of the above terms in the present invention can be understood according to the specific circumstances.

In the drawings the following reference numbers are consistently used: 1, workbench; 2, top plate; 3, adjustment and lifting mechanism; 31, lifting assembly; 3101, second fixing plate; 3102, lifting cylinder; 3103, lifting plate; 3104, linear bearing; 3106, U-shaped connecting plate; 3107, guide shaft; 32, adjustment assembly; 3201, positioning block; 3202, sliding plate; 3204, lower module fixing plate; 3205, fourth cylinder; 3206, arc-shaped lower module; 4, pre-winding mechanism; 41, wire hooking assembly; 4101, jaw cylinder; 4102, wire hooking block; 4103, spring support post; 4104, third spring; 42, wire pressing assembly; 4201, cylinder sleeve base; 4202, fifth cylinder; 4203, ejector rod connecting plate; 4204, ejector rod; 4205, second spring; 4206, through slot; 4207, wire pressing block; 4208, first spring; 4209, limiting block assembly; 4209a, lower end limiting block assembly; 4209b, upper end limiting block assembly; 43, drive assembly; 4301, servo motor; 4302, driving gear; 4303, driven gear; 44, circular die I; 45, circular die II; 46, rotating shaft; 47, circular die connector; 48, inflation assembly; 4801, fixing post; 4802, first fixing plate; 4803, third cylinder; 4804, connector fixing plate; 4805, quick connector I; 4806, air pipe adapter block; 4807, quick connector II; 4808, elbow I; 4809, elbow II; 6, vertical plate I; 7, vertical plate II.

### Embodiments

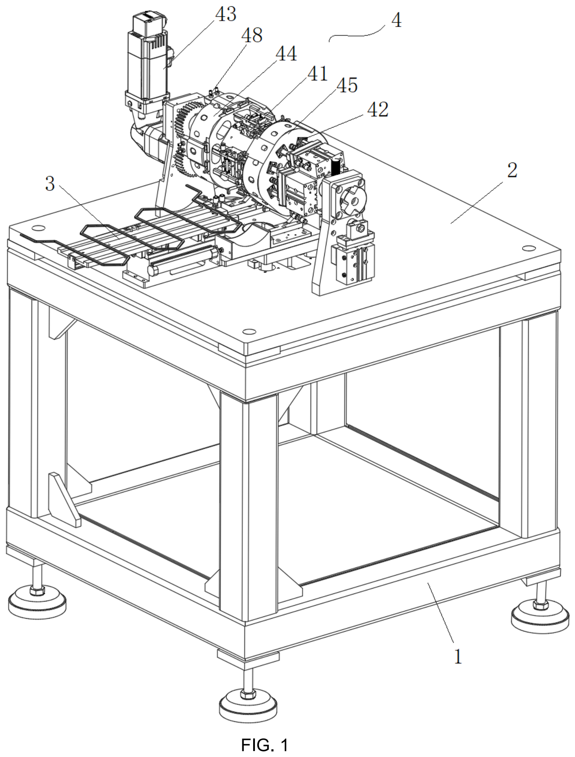

As shown in FIG. 1, the embodiment provides a 3D wave-wound wire preforming device, and the preforming device includes a workbench 1, where a top plate 2 is installed on the top of the workbench 1, an adjustment and lifting mechanism 3 and a pre-winding mechanism 4 are installed on a working surface of the top plate 2, and the pre-winding mechanism 4 is positioned on the top of an output end of the adjustment and lifting mechanism 3.

Specifically, the adjustment and lifting mechanism 3 includes a lifting assembly 31 and an adjustment assembly 32, the adjustment assembly 32 is installed on the working surface of the top plate 2, the adjustment assembly 32 is configured to transfer a wave-wound copper wire placed on the top to the lifting assembly 31, and the lifting assembly 31 is configured to lift the wave-wound copper wire to a height suitable for the pre-winding mechanism 4.

The lifting assembly 31 includes a second fixing plate 3101 fixedly installed at the bottom of the top plate 2, a lifting cylinder 3102 is fixedly installed at a bottom of the second fixing plate 3101, an output end of the lifting cylinder 3102 passes through and extends above the top plate 2 and then is connected to a lifting plate 3103, four corners of the lifting cylinder 3102 are each provided with a linear bearing 3104, and each linear bearing 3104 is fixed to the bottom surface of the top plate 2; upper and lower ends of the four linear bearings 3104 are respectively provided with lifting plates 3103 and U-shaped connecting plates 3106 at the top and bottom of the top plate 2; a guide shaft 3107 is slidably installed on an inner side of each of the four linear bearings 3104, tops of the four guide shafts 3107 respectively pass through the top plate 2 and are connected to four corners of the lifting plate 3103, and bottoms of the four guide shafts 3107 are connected to four corners of a U-shaped connecting plate 3106.

The adjustment assembly 32 includes a positioning block 3201 installed on the working surface of the top plate 2, a sliding plate 3202 matching with the positioning block is slidably installed on the top of the positioning block 3201, and a working surface of the sliding plate 3202 is provided with a wire slot matching with the wave-wound copper wire, two lower module fixing plates 3204 symmetrically distributed on two sides of the positioning block 3201 are fixedly installed on the top of the lifting plate 3103, an arc-shaped lower module 3206 is slidably installed on an inner side of each of the lower module fixing plates 3204, and the two arc-shaped lower modules 3206 are staggered, and corresponding to the upper end and lower end of the wave-wound copper wire respectively, a fourth cylinder 3205 is fixedly installed at one end of each of the lower module fixing plates 3204 away from the lifting cylinder 3102, and an output end of the fourth cylinder 3205 is fixedly connected to a side wall of the arc-shaped lower module 3206 on a same side.

The pre-winding mechanism 4 includes a circular die I 44 and a circular die II 45, as well as several wire hooking assemblies 41 installed between the circular die I 44 and the circular die II 45 and configured to fix the wave-wound copper wire, several wire pressing assemblies 42 installed on a same side of the circular die II 45 and configured to limit the wave-wound copper wire, and a drive assembly 43 installed on a same side of the circular die I 44; and the circular die I 44 and the circular die II 45 are respectively sleeved on two ends of the rotating shaft 46 via fixed circular die connectors 47 for synchronous rotation. It should be noted that the number of wire hooking assemblies 41 is the same as the number of wire pressing assemblies 42 and the number of upper ends of the wave-wound copper wires.

Specifically, the wire hooking assembly 41 includes a jaw cylinder 4101 installed on an outer ring of a circular die connector 47, two output ends of the jaw cylinder 4101 are fixedly connected to wire hooking blocks 4102 respectively, adjacent ends of the two wire hooking blocks 4102 are fixedly provided with a spring support post 4103 respectively, and the two spring support posts 4103 are elastically connected via a third spring 4104, to ensure the stability of wire hooking; and a speed control valve is further installed at the jaw cylinder 4101.

A vertical plate I 6 and a vertical plate II 7 are respectively installed on two sides of the working surface of the top plate 2; the drive assembly 43 includes a servo motor 4301, a driving gear 4302, and a driven gear 4303; the servo motor 4301 is installed on an outer side of the vertical plate II 7, an output end of the servo motor 4301 passes through the vertical plate **II** 7, extends to an inner side of the vertical plate **II** 7, and then is coaxially fixed to the driving gear 4302; and the driven gear 4303 is installed on the inner side of the vertical plate **II** 7 and is engaged with the driving gear 4302 for transmission.

**The** wire pressing assembly 42 includes a cylinder sleeve base 4201 fixedly sleeved on an outer surface of a rotating shaft 46, a shape of the cylinder sleeve base 4201 can be set according to the specifications and shape of the wave-wound copper wire, several fifth cylinders 4202 are installed around the cylinder sleeve base 4201, an output end of each of the fifth cylinders 4202 is provided with a ejector rod connecting plate 4203 (the ejector rod connecting plate 4203 is elastically reset by a second spring 4205), a side of the ejector rod connecting plate 4203 away from the adjacent fifth cylinder 4202 is fixedly provided with two symmetrically distributed ejector rods 4204, and ends of the ejector rods 4204 away from the adjacent ejector rod connecting plate 4203 are slidably connected to the circular die II 45.

Each ejector rod connecting plate 4203 is elastically connected to the circular die II 45 via the second spring 4205, and the second spring 4205 is positioned between the two adjacent ejector rods 4204. A side of the circular die II 45 away from a fifth cylinder 4202 is provided with a plurality of through slots 4206 arranged in an annular array, and one end of the ejector rod 4204 away from the fifth cylinder 4202 extends into the through slot 4206 at a same horizontal position. The function thereof is that when the fifth cylinder 4202 retracts to its reset position, the ejector rods 4204, under the action of the second spring 4205, slowly retract from the through slots 4206. Meanwhile, the wire pressing block 4207 retracts into the through slot 4206 under the action of the first spring 4208, thereby preparing for next wire pressing operation.

A wire pressing portion that is configured to limit the wave-wound copper wire is provided on an inner side of each of the through slots 4206 and includes a wire pressing block 4207, a first spring 4208, and a limiting block assembly 4209; the wire pressing block 4207 is positioned inside the through slot 4206 and is in contact with an adjacent ejector rod 4204; one end of the ejector rod 4204 in contact with the wire pressing block 4207 is an inclined surface, one end of the wire pressing block 4207 close to an axis of the rotating shaft 46 is an arc surface, and the inclined surface is in contact with the arc surface; and an inner top wall of the through slot 4206 is provided with a through hole through which the wire pressing block 4207 passes; and the wire pressing block 4207 is elastically connected to an inner wall of the through slot 4206 via first springs 4208 fixed on both sides thereof, and is blocked and limited by a cover plate fixed onto a side of the circular die II 45 near the circular die connector 47. Limiting block assemblies 4209 are installed on outer surfaces of the circular die I 44 and the circular die II 45.

It should be noted that the limiting block assembly 4209 includes a lower end limiting block assembly 4209a and an upper end limiting block assembly 4209b symmetrically arranged on two sides of the wire hooking assembly 41 (that is, the lower end limiting block assembly 4209a is positioned at the circular die I 44, the upper end limiting block assembly 4209b is positioned at the circular die II 45, two lower end limiting block assemblies 4209a are provided and corresponding to lower ends of two pins of the wave-wound copper wire, and three upper end limiting block assemblies 4209b are provided and corresponding to upper ends of three pins of the wave-wound copper wire, thus achieving subsequent limiting and fixing operations). Additionally, an inclined surface is provided below a side of the upper end limiting block assembly 4209b close to the wire pressing block 4207. When the wire pressing block 4207 moves upward, the pin of the wave-wound copper wire is pressed against the underside of the inclined surface, thereby achieving the limiting function thereof.

The wire hooking assembly 41 is inflated via an inflation assembly 48 fixed to a bottom of the top plate 2. The inflation assembly 48 includes a first fixing plate 4802 fixed to the bottom of the top plate 2 via a fixing post 4801, a third cylinder 4803 is installed on the top of the first fixing plate 4802, and an output end of the third cylinder 4803 passes through the top plate 2 and is fixed to a connector fixing plate 4804. The function thereof is that when the quick connector II 4807 needs to be quickly inflated and the third cylinder 4803 pushes an interface fixing plate upward, such that the quick connector I 4805 is docked with the quick connector II 4807 to achieve inflation. Two quick connectors I 4805 are installed on a side of the connector fixing plate 4804 close to the wire hooking assembly 41.

Air pipe adapter blocks 4806 with the number corresponding to the number of wire pressing assemblies 42 are installed on an outer side of the circular die I 44, two quick connectors II 4807 used for communicating with the quick connectors I 4805 are fixedly installed at a bottom of each of the air pipe adapter blocks 4806 respectively, a set of elbows I 4808 that are respectively communicated with the quick connectors II 4807 inside the same air pipe adapter block 4806 are further installed on the top of the air pipe adapter block 4806, and each set of elbows I 4808 passes through the through slot 4206 and is respectively communicated with an elbows II 4809 at an air supply end of the jaw cylinder 4101 at a same horizontal position, providing air supply to the jaw cylinder 4101 of the wire hooking assembly 41, thereby enabling the wire hooking block 4102 to pick and place the copper wire.

It should be noted that the circular die I 44 and the circular die II 45 have basically the same structure, so structural positions described in the embodiment are unaffected whether referenced to the circular die I 44 or the circular die II 45. A difference between the circular die I and the circular die II is that the through slots 4206 therein are different, where the connecting through slot 4210 in the circular die I 44 is used for the passage of the elbow I 4808, while the through slot 4206 in the circular die II 45 is used for placing the wire pressing block 4207. Additionally, two protruding arcs are provided on the circular die I 44, while three protruding arcs are provided on the circular die II 45. Lower ends of the two pins of the wave-wound copper wire and upper ends of the three pins thereof are limited via the lower end limiting block assembly 4209a and the upper end limiting block assembly 4209b respectively installed at these protruding arcs.

For the 3D wave-wound wire preforming device described in the embodiment, before pre-winding, the sliding plate 3202 is pulled to the outermost side of the top plate 2, the wave-wound copper wire is placed on the sliding plate 3202, and one pin on the outer side of the wave-wound copper wire is placed into the wire slot to prevent misalignment during processing. Then, the sliding plate 3202 is pushed toward the pre-winding mechanism 4, such that a first upper end of the wave-wound copper wire is positioned directly below a first pair of wire pressing portions. Additionally, the fourth cylinder 3205 on one side of the upper end of the wave-wound copper wire pushes the arc-shaped lower module 3206 to slide toward the pre-winding mechanism 4, such that the arc-shaped lower module 3206 is positioned directly below the upper end of the wave-wound copper wire, preparing for pre-winding operation.

During pre-winding, the first upper end of the wave-wound copper wire is positioned directly below the pre-winding mechanism 4. The two arc-shaped lower modules 3206 are respectively positioned at the upper end and lower end of the wave-wound copper wire. The lifting cylinder 3102 pushes the lifting plate 3103 upward, such that the two arc-shaped lower modules 3206 are in contact with two ends of the wave-wound copper wire and push the two ends upward, preparing to feed the wave-wound copper wire into the pre-winding mechanism 4.

In this case, the fifth cylinder 4202 pushes the ejector rod connecting plate 4203, such that the two ejector rods 4204 on the ejector rod connecting plate 4203 are pushed into the interior of the circular die II 45, and the wire pressing block 4207 is lifted. The pins on two sides of the upper end of the wave-wound copper wire are limited between the upper end limiting block assembly 4209b and the wire pressing block 4207. Then, the wire hooking assembly 41 hooks the middle part of the wave-wound copper wire via the wire hooking block 4102. Subsequently, the drive assembly 43 drives the rotating shaft 46 to rotate, such that the wire pressing assembly 42 and the wire hooking assembly 41 are synchronously rotated to wind the upper end of the hooked wave-wound copper wire. After the upper end is wound, the lifted lower ends of the pins are pushed to the lower side of the pre-winding mechanism 4 by the fourth cylinder 3205 and the lower end limiting block assembly 4209a is limited to implement winding. When the next wire pressing assembly 42 is rotated to the top of the lifting assembly 31, wire pressing and hooking operations are performed on the upper ends of the next wave-wound copper wire, and the process is repeated until the entire wave-wound copper wire is pre-wound.

It should be noted that the structure described in the present invention can be implemented in various forms and is not limited to the embodiments described herein.

Any equivalent transformation made by those skilled in the art based on the content of this specification and accompanying drawings, direct or indirect applications in other related technical fields, such as loading and unloading of other items, should fall within the scope of patent protection of the present invention as defined in the appended claims.

## Claims

1. A 3D wave-wound wire preforming device, comprising a workbench (1), wherein a top plate (2) is installed on the top of the workbench (1), an adjustment and lifting mechanism (3) and a pre-winding mechanism (4) are installed on a working surface of the top plate (2), and the pre-winding mechanism (4) is positioned on the top of an output end of the adjustment and lifting mechanism (3);
the adjustment and lifting mechanism (3) comprises a lifting assembly (31) and an adjustment assembly (32), the adjustment assembly (32) is installed on the working surface of the top plate (2), the adjustment assembly (32) is configured to transfer a wave-wound copper wire placed on the top to the lifting assembly (31), and the lifting assembly (31) is configured to lift the wave-wound copper wire to a height suitable for the pre-winding mechanism (4);
the pre-winding mechanism (4) comprises a circular die I (44) and a circular die II (45), as well as several wire hooking assemblies (41) installed between the circular die I (44) and the circular die II (45) and configured to fix the wave-wound copper wire, several wire pressing assemblies (42) installed on a same side of the circular die II (45) and configured to limit the wave-wound copper wire, and a drive assembly (43) installed on a same side of the circular die I (44); a side of the circular die II (45) away from a fifth cylinder (4202) is provided with a plurality of through slots (4206) arranged in an annular array, a wire pressing portion that is configured to limit the wave-wound copper wire is provided on an inner side of each of the through slots (4206) and comprises a wire pressing block (4207), a first spring (4208), and a limiting block assembly (4209); the wire pressing block (4207) is positioned at the inner side of the through slot (4206) and in contact with an adjacent ejector rod (4204), and an inner top wall of the through slot (4206) is provided with a through hole through which the wire pressing block (4207) passes; and the wire pressing block (4207) is elastically connected to an inner wall of the through slot (4206) via first springs (4208) fixed on both sides thereof;
the limiting block assembly (4209) is configured to limit the wave-wound copper wire and is installed on outer surfaces of the circular die I (44) and the circular die II (45);
the wire pressing assembly (42) comprises a cylinder sleeve base (4201) fixedly sleeved on an outer surface of a rotating shaft (46), several fifth cylinders (4202) are installed around the cylinder sleeve base (4201), an output end of each of the fifth cylinders (4202) is provided with an ejector rod connecting plate (4203), a side of the ejector rod connecting plate (4203) away from the adjacent fifth cylinder (4202) is fixedly provided with two symmetrically distributed ejector rods (4204), and ends of the ejector rods (4204) away from the adjacent ejector rod connecting plate (4203) are slidably connected to the circular die II (45);
the number of wire hooking assemblies (41) is the same as the number of wire pressing assemblies (42), the wire hooking assembly (41) comprises a jaw cylinder (4101) installed on an outer ring of a circular die connector (47), two output ends of the jaw cylinder (4101) are fixedly connected to wire hooking blocks (4102) respectively, adjacent ends of the two wire hooking blocks (4102) are fixedly provided with a spring support post (4103) respectively, and the two spring support posts (4103) are elastically connected via a third spring (4104);
the circular die I (44) and the circular die II (45) are respectively sleeved on two ends of the rotating shaft (46) via fixed circular die connectors (47) for synchronous rotation; and
the wire hooking assemblies (41) are inflated via an inflation assembly (48) fixed to a bottom of the top plate (2).

2. The 3D wave-wound wire preforming device according to claim 1, wherein the lifting assembly (31) comprises a second fixing plate (3101) fixedly installed at the bottom of the top plate (2), a lifting cylinder (3102) is fixedly installed at a bottom of the second fixing plate (3101), an output end of the lifting cylinder (3102) passes through and extends above the top plate (2) and then is connected to a lifting plate (3103), four corners of the lifting cylinder (3102) are each provided with a linear bearing (3104), a guide shaft (3107) is slidably installed on an inner side of each of the four linear bearings (3104), tops of the four guide shafts (3107) respectively pass through the top plate (2) and are connected to four corners of the lifting plate (3103), and bottoms of the four guide shafts (3107) are connected to four corners of a U-shaped connecting plate (3106).

3. The 3D wave-wound wire preforming device according to claim 2, wherein the adjustment assembly (32) comprises a positioning block (3201) installed on the working surface of the top plate (2), a sliding plate (3202) matching with the positioning block is slidably installed on the top of the positioning block (3201), two lower module fixing plates (3204) symmetrically distributed on two sides of the positioning block (3201) are fixedly installed on the top of the lifting plate (3103), an arc-shaped lower module (3206) is slidably installed on an inner side of each of the lower module fixing plates (3204), a fourth cylinder (3205) is fixedly installed at one end of each of the lower module fixing plates (3204) away from the lifting cylinder (3102), and an output end of the fourth cylinder (3205) is fixedly connected to a side wall of the arc-shaped lower module (3206) on a same side.

4. The 3D wave-wound wire preforming device according to claim 1, wherein a vertical plate I (6) and a vertical plate II (7) are respectively installed on two sides of the working surface of the top plate (2); the drive assembly (43) comprises a servo motor (4301), a driving gear (4302), and a driven gear (4303); the servo motor (4301) is installed on an outer side of the vertical plate II (7), an output end of the servo motor (4301) passes through the vertical plate II (7), extends to an inner side of the vertical plate II (7), and then is coaxially fixed to the driving gear (4302); and the driven gear (4303) is installed on the inner side of the vertical plate II (7) and is engaged with the driving gear (4302) for transmission.

5. The 3D wave-wound wire preforming device according to claim 4, wherein each ejector rod connecting plate (4203) is elastically connected to the circular die II (45) via a second spring (4205), the second spring (4205) is positioned between the two adjacent ejector rods (4204), and one end of the ejector rod (4204) away from the fifth cylinder (4202) extends into the through slot (4206) at a same horizontal position.

6. The 3D wave-wound wire preforming device according to claim 5, wherein one end of the ejector rod (4204) in contact with the wire pressing block (4207) is an inclined surface, one end of the wire pressing block (4207) close to an axis of the rotating shaft (46) is an arc surface, and the inclined surface is in contact with the arc surface.

7. The 3D wave-wound wire preforming device according to claim 6, wherein the inflation assembly (48) comprises a first fixing plate (4802) fixed to the bottom of the top plate (2) via a fixing post (4801), a third cylinder (4803) is installed on the top of the first fixing plate (4802), an output end of the third cylinder (4803) passes through the top plate (2) and is fixed to a connector fixing plate (4804), and two quick connectors I (4805) are installed on a side of the connector fixing plate (4804) close to the wire hooking assembly (41); and
air pipe adapter blocks (4806) with the number corresponding to the number of wire pressing assemblies (42) are installed on an outer side of the circular die I (44), a plurality of connecting through slots (4210) arranged in an annular array are formed inside the circular die I (44), two quick connectors **II** (4807) used for communicating with the quick connectors I (4805) are fixedly installed at a bottom of each of the air pipe adapter blocks (4806) respectively, a set of elbows I (4808) that are respectively communicated with the quick connectors II (4807) inside the same air pipe adapter block (4806) are further installed on the top of the air pipe adapter block (4806), and each set of elbows I (4808) passes through the connecting through slot (4210) and is respectively communicated with an elbows II (4809) at an air supply end of the jaw cylinder (4101) at a same horizontal position.
